# EUROPÄISCHE PATENTSCHRIFT

(11) **EP 1 172 633 B1**
(45) Veröffentlichungstag und Bekanntmachung des Hinweises auf die Patenterteilung: **29.09.2010**
(21) Anmeldenummer: 01117061.0
(22) Anmeldetag: 13.07.2001
(51) Int. Cl.: G01C 21/34, G08G 1/0969

(54) **Navigationsverfahren und Navigationsgerät**
Navigation method and device
Méthode de navigation et dispositif de navigation

(30) Priorität: 15.07.2000 DE 10034463
(43) Veröffentlichungstag der Anmeldung: 16.01.2002
(73) Patentinhaber: ROBERT BOSCH GMBH, 70442 Stuttgart (DE)
(72) Erfinder: Duckeck, Ralf, 31137 Hildesheim (DE)

(56) Entgegenhaltungen:
- EP-A- 0 978 705
- DE-A- 19 858 568
- DE-C- 19 636 379

## Beschreibung

### Stand der Technik

Die Erfindung geht aus von einem Navigationsverfahren bzw. einem Navigationsgerät nach der Gattung der unabhängigen Patentansprüche.

Es sind bereits Navigationsgeräte für Kraftfahrzeuge und für den portablen Gebrauch bekannt, die nach Eingabe eines Ziels eine Route berechnen und entsprechende Hinweise in Abhängigkeit vom aktuellen Standort des Navigationsgeräts ausgeben. Es ist weiterhin das Verfahren der dynamischen Navigation bekannt, wobei mittels aktueller Verkehrsdaten, die aus digitalen Funksignalen gewonnen werden, eine aktualisierte Routenberechnung erfolgt.

Die DE 196 36 379 C1 beschreibt ein Verfahren zur Steuerung des Transport- und Reiseverkehrs. Dabei wird das Ziel verfolgt, einen möglichst großen Anteil an der Gesamtmobilität effizient und umweltverträglich so abzuwickeln, dass alle verfügbaren öffentlichen und privaten Verkehrsmittel und -systeme optimal genutzt und mit ihren Stärken eingesetzt werden.

Die EP 0 978 705 A2 beschreibt ein Verfahren zur Routenberechnung in einem Navigationsgerät für ein Fahrzeug, insbesondere für ein Kraftfahrzeug, von einem Standort zu einem von einem Benutzer vorbestimmten Zielort. Dabei werden in die Routenberechnung öffentliche Verkehrsmittel einbezogen.

Die DE 198 58 568 A1 beschreibt eine Einrichtung zur Übertragung von Fahrtroutenempfehlungen mindestens eines Netzes öffentlicher Verkehrsmittel zu Empfängern, bei der eine Kodierung mittels mindestens einer mindestens Teile des Verkehrsnetzes abbildenden Ortsdatenbank erfolgt.

### Vorteile der Erfindung

Das erfindungsgemäße Navigationsverfahren bzw. das erfindungsgemäße Navigationsgerät mit den Merkmalen der unabhängigen Patentansprüche haben demgegenüber den Vorteil, dass die Routenberechnung eines Navigationsgeräts mit Fahrplandaten des öffentlichen Personennahverkehrs kombiniert wird, um so eine Optimierung und damit Reduktion der Reisezeit zu dem eingegebenen Ziel zu erreichen. Bei der Berechnung der Reisezeit von einigen Routen zu dem Ziel werden daher gegebenenfalls auch Abfahrtszeiten und Fahrzeiten von öffentlichen Verkehrsmitteln mit eingerechnet, um die kürzeste Reisezeit zu dem eingegebenen Ziel zu ermitteln oder um zumindest weitere alternative Routen auszugeben. Der Einsatz des erfindungsgemäßen Navigationsverfahrens bzw. Navigationsgeräts führt global betrachtet zu einer Entspannung der Verkehrslage. Fahrern von Kraftfahrzeugen wird, wenn es von Vorteil ist, die Benutzung von öffentlichen Verkehrsmitteln zur Verringerung der Reisezeit vorgeschlagen. Insbesondere für ortsunkundige Personen ist dies von Vorteil, da diese Personen oftmals nicht wissen, wo und wann öffentliche Verkehrsmittel benutzbar sind. Außerdem werden die Fahrer durch das erfindungsgemäße Navigationsgerät zu bequem erreichbaren Parkplätzen in der Nähe von Haltestellen geleitet, die möglicherweise an dem eingegebenen Ziel nicht vorhanden sind. Bei der Ausgabe von mehreren Routen kann dann ein Benutzer des erfindungsgemäßen Navigationsgeräts nach seinen Präferenzen dies auswählen. Im übrigen ist das erfindungsgemäße Navigationsgerät auch für den tragbaren Einsatz geeignet, um beispielsweise einen Benutzer durch eine fremde Großstadt zu leiten.

Durch die in den abhängigen Ansprüchen aufgeführten Maßnahmen und Weiterbildungen sind vorteilhafte Verbesserungen des in den unabhängigen Patentansprüchen angegebenen Navigationsverfahrens bzw. Navigationsgeräts möglich.

Besonders vorteilhaft ist, dass die Anzahl der berechneten und ausgegebenen Routen durch einen abgespeicherten Wert vorgegeben wird oder durch eine maximale Reisezeit beschränkt wird, die der Prozessor anhand des aktuellen Standorts des erfindungsgemäßen Naivgationsgeräts und des eigegebenen Ziels berechnet. Damit wird das erfindungsgemäße Verfahren beschleunigt, da nur eine beschränkte Anzahl von Routen berechnet wird.

Weiterhin ist es von Vorteil, dass neben Straßennetzdaten und den Fahrplandaten des öffentlichen Personennahverkehrs auch Verkehrsdaten in die Berechnung der Routen und der jeweiligen Reisezeit eingehen, so dass damit eine weitere Optimierung für den Benutzer des erfindunsgemäßen Navigationsgeräts bezüglich der Reisezeit zu seinem eingegebenen Ziel erreicht wird. Dabei ist es insbesondere von Vorteil, dass diese Verkehrsdaten in digitalen Rundfunksignalen empfangen werden, beispielsweise mittels DAB (Digital Audio Broadcasting) oder TMC (Traffic Message Control), die beide eine gebührenfreie Übertragung der Verkehrsdaten ermöglichen. Außerdem sind dies Rundfunkverteilsysteme, so dass eine beliebige Anzahl von Teilnehmern im Sendegebiet erreicht werden kann. Es liegt also eine effiziente Ausnutzung des verwendeten Spektrums vor.

### Zeichnung

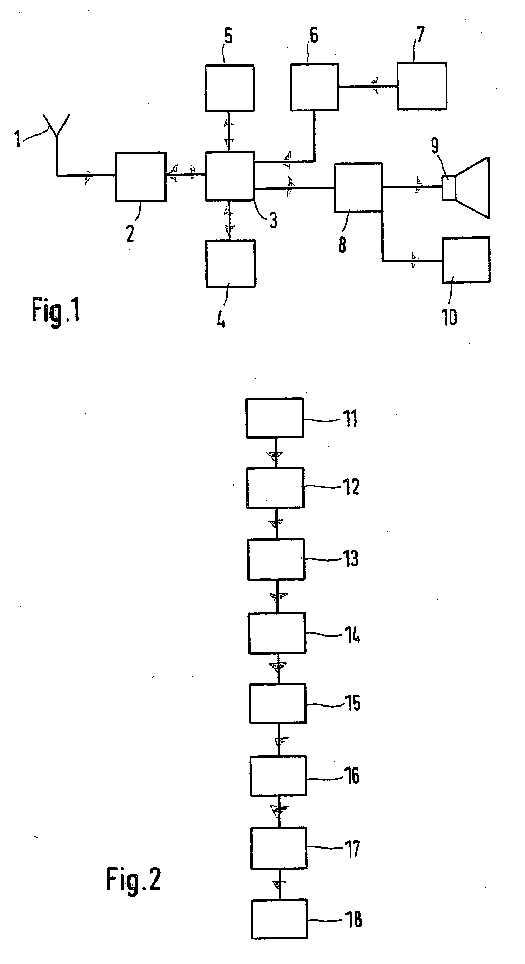

Ausführungsbeispiele der Erfindung sind in der Zeichnung dargestellt und werden in der nachfolgenden Beschreibung näher erläutert. Es zeigt Figur 1 ein Blockschaltbild des erfindungsgemäßen Navigationsgeräts und Figur 2 ein Flussdiagramm des erfindungsgemäßen Navigationsverfahrens.

### Beschreibung

Aufgrund der sich ständig verschlechternden Verkehrslage wird heutzutage mehr und mehr gefordert, auf öffentliche Verkehrsmittel umzusteigen. Insbesondere für ortsunkundige Fahrer von Kraftfahrzeugen ist es aber nicht möglich, die öffentlichen Verkehrsmittel effizient zu benutzen, da sie nicht wissen, wo und wann die öffentlichen Verkehrsmittel verfügbar sind. Erfindungsgemäß wird daher ein Navigationsgerät bzw. ein Navigationsverfahren eingesetzt, die neben den Straßennetzdaten für die Berechnung von Routen mit der jeweiligen Reisezeit zu einem eingegebenen Ziel auch die Fahrplandaten des öffentlichen Personennahverkehrs berücksichtigen. Dann wird der erste Teil der jeweiligen Route mit dem Kraftfahrzeug zurückgelegt und der zweite Teil mit dem öffentlichen Personennahverkehr. Die Route mit der kürzesten Reisezeit wird wenigstens ausgegeben, wobei weitere berechnete Routen ausgebbar sind, um einem Benutzer des erfindungsgemäßen Navigationsgeräts die Möglichkeit zu einer Routenauswahl nach seinen Präferenzen zu geben. Die Anzahl der berechneten und ausgegebenen Routen wird durch einen abgespeicherten Wert oder durch eine maximale Reisezeit beschränkt. Darüber hinaus werden in einer Weiterbildung auch aktuelle Verkehrsdaten, die mittels digitaler Funksignale empfangen werden, bei der Routenberechnung und der jeweiligen Reisezeit berücksichtigt werden.

Figur 1 zeigt als Blockschaltbild das erfindungsgemäße Navigationsgerät. Eine Antenne 1 ist an einen Eingang eines Empfängers 2 angeschlossen. Über einen ersten Datenein-/ausgang eines Prozessors 3 ist der Empfänger 2 über seinen Datenausgang angeschlossen. An einen zweiten Datenein-/Ausgang des Prozessors 3 ist der Speicher 4 angeschlossen. An einen ersten Dateneingang des Prozessors 3 ist eine Ortungsvorrichtung 5 angeschlossen. An einen zweiten Dateneingang des Prozessors 3 ist eine Signalverarbeitung 6 angeschlossen. Über einen Datenausgang des Prozessors 3 ist eine Signalverarbeitung 8 angeschlossen. An einen ersten Ausgang der Signalverarbeitung 8 ist ein Lautsprecher 9 mit Audioverstärker angeschlossen. Eine Anzeige 10 ist an einen Datenausgang der Signalverarbeitung 8 angeschlossen.

Mittels der Eingabevorrichtung 7, die hier als Tastatur am Frontpanel des erfindungsgemäßen Navigationsgeräts angebracht ist, gibt ein Benutzer seinen Zielort ein. Alternativ ist es möglich, dass die Eingabevorrichtung 7 eine zentrale Eingabevorrichtung für verschiedene Multimediaapplikationen im Kraftfahrzeug ist, wenn beispielsweise ein Auto-PC verwendet wird. Auch die Verwendung einer Spracheingabe oder eines Touchscreens ist möglich, wobei dann die Anzeige 10 mit solch einem Touchscreen ausgestattet ist.

Die Signalverarbeitung 6 wandelt diese Eingabesignale in ein für den Prozessor 3 geeignetes Format um. Der Prozessor 3 sucht für das eingegebene Ziel und den Standort des erfindungsgemäßen Navigationsgeräts, der mittels der Ortungsvorrichtung 5 ermittelt wird, die entsprechenden Straßennetzdaten aus dem Speicher 4, um eine optimale Route zu berechnen. Die Ortungsvorrichtung 5 ist hier ein GPS (Global Positioning System)-Empfänger mit Drehratensensor und der Speicher 4 ein CD-ROM-Laufwerk. Es sind auch andere Ortungsvorrichtungen möglich, beispielsweise ein Mobilfunkgerät oder die Berechung des Standorts aus empfangenen digitalen Rundfunksignalen. Alternativ ist es möglich, dass anstatt eines CD-ROM-Laufwerks auch ein DVD (Digital Versatile Disk)-Laufwerk oder eine Festplatte verwendet wird.

Neben den Straßennetzdaten weisen die Datenträger im Speicher 4 auch Fahrplandaten über den öffentlichen Personennahverkehr auf, die der Prozessor 3 auch lädt. Dabei sind in den Straßennetzdaten die Haltestellen des öffentlichen Personennahverkehrs ausgewiesen. Der Prozessor 3 berechnet nun von dem aktuellen Standort des Navigationsgeräts aus die Routen zum eingegebenen Ziel, wobei die Fahrplandaten und die Staßennetzdaten berücksichtigt werden. Dabei wird jeweils die Reisezeit für die einzelnen möglichen Routen mittels gegebener Fahrtgeschwindigkeiten (zulässige oder empfohlene Höchstgeschwindigkeit) und gegebener Fahrplanzeiten berechnet. Weiterhin berücksichtigt der Prozessor 3 den Weg vom Parkraum, in dem das Kraftfahrzeug abgestellt wurde, zu der jeweiligen Haltestelle des öffentlichen Personennahverkehrs. Die Routen mit den jeweiligen Reisezeiten überträgt der Prozessor 3 zu der Signalverarbeitung 8, die diese Routen mittels der Anzeige 10, die hier ein Plasmadisplay ist, anzeigt.

Mittels der Eingabevorrichtung 7 wählt der Fahrer die jeweilige angezeigte Route aus, um damit die Fahrhinweise zu dieser Route zu hören bzw. zu sehen. Hier ist es alternativ möglich, dass der Prozessor 3 mehrere berechnete Routen neben der mit der kürzesten Reisezeit auf die Anzeige 10 bringt. Dann kann der Benutzer mittels der Eingabevorrichtung 7 die ihm genehme Route auswählen.

Mittels der Antenne 1 des Empfängers 2 ist es in einer Weiterbildung möglich, dass das Navigationsgerät aktuelle Verkehrsdaten empfängt. Dazu ist der Empfänger 2 hier als DAB (Digital Audio Broadcasting)-Empfänger ausgebildet. DAB ist ein digitales Rundfunkübertragungsverfahren, dass aufgrund seiner Rahmenstruktur die Übertragung von Multimediadaten neben der Übertragung von reinen Audioprogrammen ermöglicht. Der Empfänger 2 filtert, verstärkt und setzt die empfangenen digitalen Rundfunksignale um und digitalisiert sie. Diese digitalen Daten werden dann an den Prozessor 3 übertragen, der noch eine Kanaldecodierung bzw. Quellendecodierung vornimmt. Die aktuellen Verkehrsdaten, die in den digitalen Rundfunksignalen vorhanden sind, werden bei der Routen- bzw. Reisezeitberechnung mit verwendet. Damit ist eine dynamische Anpassung an die aktuelle Verkehrslage möglich, denn von verkehrsbedingten Verzögerungen betroffene Strecken können dann entsprechend bei der Reisezeitberechnung berücksichtigt werden. Alternativ ist es möglich, dass anstatt eines DAB-Empfängers ein TMC (Traffic Message Control)- oder ein anderer Empfänger für digitale Rundfunksignale verwendet werden kann. Darüber hinaus ist es möglich, dass der Empfänger 2 als Mobilfunkgerät ausgebildet ist, also als eine Sendeempfangsstation, so dass mittels Mobilfunksignalen aktuelle Verkehrsdaten abgerufen werden können. Solche Mobilfunksignale sind beispielsweise GSM (Global System for Mobile Communication) oder UMTS (Universal Mobile Telecommunication System)-Signale.

Die Anzahl der berechneten und ausgegebenen Routen wird durch einen im Speicher 4 abgespeicherten Wert oder durch eine maximale Reisezeit beschränkt. Bei der maximalen Reisezeit verwendet der Prozessor 3 den aktuellen Standort und das eingegebene Ziel, wobei dann ein worst-case betrachtet wird, beispielsweise nur Landstrassen.

Es ist möglich, dass die in Figur 1 dargestellten Geräte alle an einen Multimediabus angeschlossen sind, der in einem Fahrzeug gelegt ist. Solch ein Multimediabus ist entweder als optisches Leitungssystem oder als elektrisches Leitungssystem ausgebildet, es ist auch ein funkbasierter Bus möglich. Die an solch einen Bus angeschlossenen Geräte weisen dann Buscontroller auf, der die Datenkommunikation über dem Bus ermöglicht. Liegt ein optisches Bussystem vor, dann weisen die an den Bus angeschlossenen Geräte Optokoppler auf, um die Konversion von optischen in elektrische Signale und umgekehrt zu bewerkstelligen. Bei dem funkbasierten Bus sind die Buscontroller als Sende-/Empfangsstationen für Funksignale ausgebildet. Es ist weiterhin möglich, dass das erfindungsgemäße Navigationsgerät ohne den Empfänger 2 bzw. die Antenne 1 ausgebildet ist. Dann werden nur die Straßennetzdaten und die Daten des öffentlichen Personennahverkehrs zur Routen- und Reisezeitberechnung verwendet.

In Figur 2 ist das erfindungsgemäße Verfahren als Flussdiagramm dargestellt. In Verfahrensschritt 11 gibt ein Benutzer des erfindungsgemäßen Navigationsgeräts mittels der Eingabevorrichtung 7 das gewünschte Ziel ein. In Verfahrensschritt 12 lädt der Prozessor 3 in Anbetracht dieses eingegebenen Ziels und des aktuellen Standorts des erfindungsgemäßen Navigationsgeräts die Straßennetzdaten und die Fahrplandaten des öffentlichen Personennahverkehrs.

In Verfahrensschritt 13 empfängt das erfindungsgemäße Navigationsgerät mittels der Antenne 1 und des Empfängers 2 digitale Rundfunksignale, die aktuelle Verkehrsdaten aufweisen. Diese aktuellen Verkehrsdaten werden in die Routen- und Reisezeitberechnung mit einbezogen. Beispielsweise berechnet der Prozessor 3 aus der Länge eines Staus die wahrscheinliche Zeit, um aufgrund dieses Staus ein entsprechendes Straßenstück zurückzulegen. In Verfahrensschritt 14 führt also dann der Prozessor 3 die Berechnung der Routen- und Reisezeit durch, ausgehend von dem aktuellen Standort, der mit der Ortungsvorrichtung 5 ermittelt wurde, zu dem eingegebenen Ziel. Dabei werden natürlich nicht alle möglichen Routen ausgerechnet, sondern nur solche, die unter einem vorgegebenen Schwellwert, der in Abhängigkeit von der Entfernung vom aktuellen Standort zum eingegebenen Ziel berechnet wird, liegen. Wird eine Route also berechnet, und die Zeit liegt über dem vorgegebenen Schwellwert, dann wird diese Route nicht weiter verfolgt. Eine weitere Möglichkeit ist, dass eine vorgegebene Anzahl von berechneten Routen ausgegeben wird oder dass auch nur diese vorgegebene Anzahl von Routen berechnet wird.

In Verfahrensschritt 16 wird dann die Route mit der minimalen Reisezeit auf der Anzeige 10 ausgegeben.

Gegebenenfalls werden noch weitere Reiserouten mit den nächsthöheren Reisezeitn zusätzlich ausgegeben, um einem Fahrer es zu überlassen, eine entsprechende Reiseroute nach seinen Präferenzen auszuwählen. Diese Auswahl trifft der Fahrer dann mittels der Eingabevorrichtung 7. In Verfahrensschritt 17 trifft dann der Fahrer diese Auswahl, um dann im Verfahrensschritt 18 die entsprechenden Hinweise von dem Navigationsgerät zu erhalten, um entlang der ausgewählten Route geführt zu werden. Diese Hinweise werden optisch mittels der Anzeige 10 und/oder akustisch mittels dem Lautsprecher 9 ausgegeben.

## Patentansprüche

1. Navigationsverfahren, wobei mittels des Navigationsverfahrens zu einem eingegebenen Ziel unter Berücksichtigung von Straßennetzdaten eine Route für ein Kraftfahrzeug berechnet und ausgegeben wird, wobei in Abhängigkeit von Fahrplandaten des öffentlichen Personennahverkehrs und der Straßennetzdaten Reisezeiten für Routen zu dem Ziel berechnet werden, wobei die Reisezeiten mit den entsprechenden Routen ermittelt werden, und wobei wenigstens eine Route mit der entsprechenden Reisezeit ausgegeben wird, **dadurch gekennzeichnet, dass** so viele Routen mit den entsprechenden Reisezeiten berechnet und ausgegeben werden, wie es durch eine abgespeicherte Anzahl vorgegeben ist oder durch eine maximale Reisezeit beschränkt ist.

2. Navigationsverfahren nach Anspruch 1, **dadurch gekennzeichnet, dass** in digitalen Funksignalen aktuelle Verkehrsdaten empfangen werden und dass die Routen und die entsprechenden Reisezeiten in Abhängigkeit von den Verkehrsdaten berechnet werden.

3. Navigationsverfahren nach Anspruch 2, **dadurch gekennzeichnet, dass** als die digitalen Funksignale digitale Rundfunksignale empfangen werden.

4. Navigationsverfahren nach Anspruch 3, **dadurch gekennzeichnet, dass** als die digitalen Rundfunksignale DAB- und/oder TMC-Signale empfangen werden.

5. Navigationsgerät, wobei das Navigationsgerät einen Speicher (4) zur Bereitstellung von Straßennetzdaten, eine Eingabevorrichtung (7) zur Eingabe eines Ziels, einer Ortungsvorrichtung (5) zur Bestimmung des Standorts des Navigationsgeräts, Mittel (9, 10) zur akustischen und/oder optischen Ausgabe und einen Prozessor (3) zur Berechnung einer Route zu dem Ziel aufweist, wobei der Speicher (4) Fahrplandaten des öffentlichen Personennahverkehrs aufweist und wobei der Prozessor (3) derart ausgebildet ist, dass der Prozessor (3) in Abhängigkeit von den Fahrplandaten und den Straßennetzdaten Routen mit Reisezeiten zu dem Ziel berechnet und wobei das Navigationsgerät mit den Mitteln (9, 10) zur akustischen und/oder optischen Ausgabe wenigstens einer Route mit der entsprechenden Reisezeit darstellt, **dadurch gekennzeichnet, dass** der Prozessor (3) zu dem eingegebenen Ziel so viele Routen mit den jeweiligen Reisezeiten berechnet, wie es durch eine im Speicher (4) abgespeicherte Anzahl vorgegeben ist oder durch eine maximale Reisezeit beschränkt wird, die der Prozessor (3) anhand des Standorts des Navigationsgeräts und des eingegebenen Ziels berechnet.

6. Navigationsgerät nach Anspruch 5, **dadurch gekennzeichnet, dass** der Prozessor (3) mit einem Empfänger (2) für digitale Funksignale verbunden ist, dass der Empfänger (2) aktuelle Verkehrsdaten empfängt, dass der Empfänger (2) die aktuellen Verkehrsdaten der Prozessor (3) überträgt und dass der Prozessor (3) die Routen mit den jeweiligen Reisezeiten in Abhängigkeit von den aktuellen Verkehrsdaten berechnet.

7. Navigationsgerät nach Anspruch 6, **dadurch gekennzeichnet, dass** der Empfänger (2) für den Empfang von digitalen Rundfunksignalen ausgebildet ist.

8. Navigationsgerät nach Anspruch 7, **dadurch gekennzeichnet, dass** der Empfänger (2) als DAB oder TMC-Empfänger ausgebildet ist.

## Claims

1. Navigation method, wherein the navigation method is used to calculate and output a route for a motor vehicle to an input destination by taking account of road network data, wherein timetable data for the public local passenger traffic and the road network data are taken as a basis for calculating travel times for routes to the destination, wherein the travel times are ascertained using the appropriate routes, and wherein at least one route is output with the appropriate travel time, **characterized in that** as many routes with the appropriate travel times are calculated and output as prescribed by a stored number or as limited by a maximum travel time.

2. Navigation method according to Claim 1, **characterized in that** current traffic data are received in digital radio signals and **in that** the routes and the appropriate travel times are calculated on the basis of the traffic data.

3. Navigation method according to Claim 2, **characterized in that** the digital radio signals received are digital broadcast radio signals.

4. Navigation method according to Claim 3, **characterized in that** the digital broadcast radio signals received are DAB and/or TMC signals.

5. Navigation appliance, wherein the navigation appliance has a memory (4) for providing road network data, an input apparatus (7) for inputting a destination, a position-finding apparatus (5) for determining the location of the navigation appliance, means (9, 10) for audible and/or visual output and a processor (3) for calculating a route to the destination, wherein the memory (4) has timetable data for the public local passenger traffic and wherein the processor (3) is designed such that the processor (3) takes the timetable data and the road network data as a basis for calculating routes with travel times to the destination and wherein the navigation appliance uses the means (9, 10) for audible and/or visual output to present at least one route with the appropriate travel time, **characterized in that** the processor (3) calculates, for the input destination, as many routes with the respective travel times as prescribed by a number stored in the memory (4) or as limited by a maximum travel time which the processor (3) calculates using the location of the navigation appliance and the input destination.

6. Navigation appliance according to Claim 5, **characterized in that** the processor (3) is connected to a receiver (2) for digital radio signals, **in that** the receiver (2) receives current traffic data, **in that** the receiver (2) transmits the current traffic data to the processor (3), and **in that** the processor (3) calculates the routes with the respective travel times on the basis of the current traffic data.

7. Navigation appliance according to Claim 6, **characterized in that** the receiver (2) is designed to receive digital broadcast radio signals.

8. Navigation appliance according to Claim 7, **characterized in that** the receiver (2) is in the form of a DAB or TMC receiver.

## Revendications

1. Procédé de navigation dans lequel l'itinéraire d'un véhicule jusqu'à une destination introduite est calculé en tenant compte de données du réseau routier et est présenté,
des durées de voyage jusqu'à la destination étant calculées pour les itinéraires en fonction de données d'horaire du réseau de transport public régional de personnes et des données sur le réseau routier,
les durées de voyage étant déterminées pour les itinéraires concernés et au moins un itinéraire et la durée de voyage qui correspond à celui-ci étant présentés,
**caractérisé en ce que**
le nombre d'itinéraires calculés et présentés et les durées de voyage qui correspondent à ceux-ci sont prédéterminés par un nombre conservé en mémoire ou sont limités par une durée maximale de voyage.

2. Procédé de navigation selon la revendication 1, **caractérisé en ce que** des données actualisées sur le trafic sont reçues dans des signaux radio numériques et **en ce que** les itinéraires et les durées de voyage qui correspondent à ceux-ci sont calculés en fonction des données sur le trafic.

3. Procédé de navigation selon la revendication 2, **caractérisé en ce que** les signaux radio numériques sont des signaux de radiodiffusion numérique.

4. Procédé de navigation selon la revendication 3, **caractérisé en ce que** les signaux de radiodiffusion numérique reçus sont des signaux DAB et/ou des signaux TMC.

5. Appareil de navigation, l'appareil de navigation présentant
une mémoire (4) qui conserve des données sur le réseau routier,
un dispositif d'introduction (7) qui permet d'introduire une destination,
un dispositif de localisation (5) qui permet de déterminer le site où se trouve l'appareil de navigation,
des moyens (9, 10) de présentation acoustique et/ou visuelle et
un processeur (3) qui calcule un itinéraire jusqu'à la destination,
la mémoire (4) présentant des données d'horaire du réseau de transport public régional de personnes,
le processeur (3) étant configuré de telle sorte que le processeur (3) calcule en fonction des données d'horaire et des données sur le réseau routier des itinéraires jusqu'à la destination et les durées de voyage qui correspondent à ceux-ci,
l'appareil de navigation présentant à l'aide des moyens (9, 10) de présentation acoustique et/ou visuelle au moins un itinéraire et la durée de voyage qui correspond à celui-ci,
**caractérisé en ce que**
le processeur (3) calcule un nombre d'itinéraires jusqu'à la destination introduite et les durées de voyage qui correspondent à ceux-ci prédéterminés par un nombre conservé dans la mémoire (4) ou limités par une durée maximale de voyage que le processeur (3) calcule à partir du site où se trouve l'appareil de navigation et de la destination introduite.

6. Appareil de navigation selon la revendication 5, **caractérisé en ce que** le processeur (3) est relié à un récepteur (2) de signaux radionumériques, **en ce que** le récepteur (2) reçoit des données actualisées sur le trafic, **en ce que** le récepteur (2) transmet au processeur (3) les données actualisées sur le trafic et **en ce que** le processeur (3) calcule les itinéraires et les durées de voyage qui correspondent à ceux-ci en fonction des données actualisées sur le trafic.

7. Appareil de navigation selon la revendication 6, **caractérisé en ce que** le récepteur (2) est configuré pour recevoir des signaux de radiodiffusion numérique.

8. Appareil de navigation selon la revendication 7, **caractérisé en ce que** le récepteur (2) est configuré comme récepteur DAB ou TMC.
